# EUROPÄISCHE PATENTSCHRIFT

(11) **EP 0 848 856 B1**
(45) Veröffentlichungstag und Bekanntmachung des Hinweises auf die Patenterteilung: **13.06.2001**
(21) Anmeldenummer: 97921686.8
(22) Anmeldetag: 22.04.1997
(51) Int. Cl.: H01M 2/16

(54) **VERFAHREN ZUR HERSTELLUNG VON TRENNMATERIALIEN**
METHOD OF PRODUCING SEPARATING MATERIALS
PROCEDE DE PRODUCTION DE MATERIAUX DE SEPARATION

(30) Priorität: 09.07.1996 DE 19627614
(43) Veröffentlichungstag der Anmeldung: 24.06.1998
(73) Patentinhaber: Accumulatorenwerke Hoppecke Carl Zoellner & Sohn GmbH & Co. KG, 59929 Brilon (DE)
(72) Erfinder: NITSCHE, Werner, D-58559 Lippstadt (DE); LAHME, Norbert, D-59929 Brilon (DE); SASSMANNSHAUSEN, Günter, D-59929 Brilon (DE)
(74) Vertreter: Stenger, Watzke & Ring Patentanwälte
(86) Internationale Anmeldenummer: EP9702019
(87) Internationale Veröffentlichungsnummer: WO9801912

(56) Entgegenhaltungen:
- EP-A- 0 096 860
- WO-A-91/16733
- US-A- 5 618 642
- PATENT ABSTRACTS OF JAPAN vol. 011, no. 187 (E-516), 16.Juni 1987 & JP 62 017946 A (YUASA BATTERY CO LTD), 26.Januar 1987,

## Beschreibung

Die Erfindung betrifft ein Verfahren zur Herstellung von Bleiakkumulatoren, bei dem als Trennmaterial eine poröse PE-Folie mit Kieselsäureeinlagerungen verwendet wird.

Bei elektrochemischen Prozessen, insbesondere in elektrochemischen Energiespeichern, werden bekanntermaßen Elektroden durch die Verwendung von Trennmaterialien voneinander getrennt. Bei den Trennmaterialien handelt es sich um chemisch indifferentes Material, welches in porösem oder durchlöchertem Zustand eingesetzt wird. Beispielsweise wird heutzutage bei der Herstellung von Bleiakkumulatoren als Trennmaterial eine mit Kieselsäureeinlagerungen versehene Polyethylen-Folie (PE-Folie) verwendet.

Es ist bekannt, daß es in den unterschiedlichsten Verarbeitungs-, Lager- und/oder Transportzuständen der Energiespeicher zu lonenwanderungen kommt, wobei die lonen von den Elektroden ausgehen und beispielsweise auch in das Trennmaterial einwandern. Insbesondere bei Bleiakkumulatoren wird dadurch das Tiefentladeverhalten erheblich verschlechtert.

Ausgehend von diesem Stand der Technik liegt der vorliegenden Erfindung die **Aufgabe** zugrunde, ein Verfahren zur Herstellung von Trennmaterialien anzugeben, durch welches einer lonenwanderung entgegengewirkt und eine Herabsetzung der lonenkonzentration im Trennmaterial ermöglicht werden kann.

Zur technischen **Lösung** dieser Aufgabe wird mit der Erfindung vorgeschlagen, daß das fertiggestellte Trennmaterial einer Behandlung mit wenigstens einer Säure aus der Gruppe Schwefel-, Phosphor- oder Sulfonsäuren und/oder wenigstens einem Salz der Gruppe der Sulfate, Phosphate oder Diphosphate der Alkali- oder Erdalkalimetalle unterzogen wird, wobei diese Behandlung vor dem Einbau in die Zelle erfolgt.

Durch die erfindungsgemäße Lehre wird die Herstellung von Trennmaterial für den Einsatz bei elektrochemischen Prozessen, insbesondere in Bleiakkumulatoren, verbessert, durch welche eine lonenkonzentration im Trennmaterial herabgesetzt und eine lonenwanderung reduziert werden kann.

In überraschender Weise hat sich herausgestellt, daß eine Behandlung des Trennmaterials mit einer der angegebenen Säuren oder einem der angegebenen Salze zu einer erheblichen Herabsetzung der lonenkonzentration im Trennmaterial und somit einer erheblichen Verbesserung des Tiefentladeverhaltens des Energiespeichers führt.

Gemäß einem Vorschlag der Erfindung wird das Trennmaterial mit wenigstens einer der angegebenen Säuren oder einem der Salze imprägniert. Mit besonderem Vorteil wird vorgeschlagen, daß das Trennmaterial in einem der angegebenen Mittel getränkt wird.

Auch ist es möglich, in das Trennmaterial bei dessen Herstellung Salze der angegebenen Gruppen einzulagern.

In besonders vorteilhafter Weise werden als Sulfate, Phosphate oder Diphosphate die des Natriums verwendet.

Gemäß einem alternativen vorteilhaften Vorschlag werden als Sulfate, Phosphate oder Diphosphate die des Magnesiums verwendet.

Mit der Erfindung wird ein einfaches Herstellungsverfahrens angegeben, welches ein Trennmaterial hervorbringt, welches nicht zum Aufbau hoher lonenkonzentrationen aufgrund von lonenwanderungen in elektrochemisch wirkenden Energiespeichern geeignet ist. Dadurch wird insbesondere das Tiefentladeverhalten eines entsprechenden Energiespeichers verbessert.

In überraschender Weise hat sich herausgestellt, daß durch die angegebenen Maßnahmen, insbesondere die Säurebehandlung, auch ein weiterer sehr positiver Effekt erzielt wird. Die heutzutage üblicherweise verwendeten Trennmaterialien, beispielsweise die angegebene PE-Folie mit Kieselsäureeinlagerungen, neigen im Rahmen der Verarbeitung durch Feuchteaufnahme und anschließendem Trocknen zum Schrumpfen. Es hat sich in überraschender Weise herausgestellt, daß eine Säurebehandlung in der erfindungsgemäßen Weise einem Schrumpfen der Trennmaterialien entgegenwirkt. Hieraus ergibt sich auch eine einfache Nachweismöglichkeit für die Anwendung des erfindungsgemäßen Verfahrens.

Das erfindungsgemäße Verfahren läßt sich während der Herstellung des Trennmaterials oder während einer der folgenden Verarbeitungsstufen einfach und mit einfachen technischen Mitteln anwenden. Das hervorgebrachte Trennmaterial verbessert die elektrochemischen Eigenschaften von Energiespeichern erheblich.

## Patentansprüche

1. Verfahren zur Herstellung von Bleiakkumulatoren, bei dem als Trennmaterial eine poröse PE-Folie mit Kieselsäureeinlagerungen verwendet wird, wobei zum Herabsetzen der durch lonenwanderung im Energiespeicher hervorgerufenen lonenkonzentration im Trennmaterial das Trennmaterial vor dem Einbau in die Zelle mit wenigstens einer Säure aus der Gruppe Schwefel-, Phosphor- oder Sulfonsäuren und/oder wenigstens einem Salz der Gruppe der Sulfate, Phosphate oder Diphosphate der Alkali- oder Erdalkalimetalle behandelt und eines dieser angegebenen Mittel im Trennmaterial eingelagert wird.

2. Verfahren nach Anspruch 1, dadurch gekennzeichnet, daß das Trennmaterial mit den Säuren oder Salzen imprägniert.

3. Verfahren nach einem der vorhergehenden Ansprüche, dadurch gekennzeichnet, daß das Trennmaterial in einem der angegebenen Mittel getränkt wird.

4. Verfahren nach einem der vorhergehenden Ansprüche, dadurch gekennzeichnet, daß als eines der Alkalimetalle Natrium verwendet wird.

5. Verfahren nach einem der vorhergehenden Ansprüche, dadurch gekennzeichnet, daß als eines der Erdalkalimetalle Magnesium verwendet wird.

## Claims

1. Method for producing lead-acid accumulators, in which a porous PE film with silicic acid inclusions is used as a separating material, in which, in order to reduce the ion concentration, caused by ion migration in the energy store, in the separating material, the separating material is treated, before being fitted into the cell, with at least one acid from the group of sulphuric, phosphoric or sulphonic acids and/or at least one salt from the group of sulphates, phosphates or diphosphates of the alkaline or alkaline-earth metals, and one of these said agents is incorporated in the separating material.

2. Method according to Claim 1, characterized in that the separating material is impregnated with the acids or salts.

3. Method according to one of the preceding claims, characterized in that the separating material is immersed in one of the said agents.

4. Method according to one of the preceding claims, characterized in that sodium is used as one of the alkaline metals.

5. Method according to one of the preceding claims, characterized in that magnesium is used as one of the alkaline-earth metals.

## Revendications

1. Procédé de fabrication d'accumulateurs au plomb, selon lequel un film de PE poreux avec des inclusions d'acide silicique est utilisé en tant que matériau de séparation, le matériau de séparation étant traité avant la mise en place dans la cellule avec au moins un acide du groupe des acides sulfuriques, phosphoriques ou sulfoniques, et/ou au moins un sel du groupe des sulfates, des phosphates ou des diphosphates des métaux alcalins ou alcalinoterreux, afin de réduire la concentration ionique provoquée dans le matériau de séparation par une migration ionique dans l'accumulateur d'énergie, et l'une de ces substances étant incluse dans le matériau de séparation.

2. Procédé selon la revendication 1, caractérisé en ce que le matériau de séparation est imprégné des acides ou des sels.

3. Procédé selon l'une des revendications précédentes, caractérisé en ce que le matériau de séparation est trempé dans l'une des substances mentionnées.

4. Procédé selon l'une des revendications précédentes, caractérisé en ce que l'un des métaux alcalins utilisé est du sodium.

5. Procédé selon l'une des revendications précédentes, caractérisé en ce que l'un des métaux alcalinoterreux utilisé est du magnésium.
